**Europäisches Patentamt**

**European Patent Office**

**Office européen des brevets**

(11) Veröffentlichungsnummer: **0 113 412**
**A2**

# (12) EUROPÄISCHE PATENTANMELDUNG

(21) Anmeldenummer: **83111458.2**

(22) Anmeldetag: **17.11.83**

(51) Int. Cl.³: **G 01 S 13/04**

(30) Priorität: **09.12.82 DD 245737**

(43) Veröffentlichungstag der Anmeldung:
**18.07.84 Patentblatt 84/29**

(84) Benannte Vertragsstaaten:
**AT BE CH DE FR GB IT LI LU NL SE**

(71) Anmelder: **Sectron**
**Handwerkerzone**
**I-39050 Deutschnofen(IT)**

(72) Erfinder: **Baldeweg, Frank, Prof. Dr.**
**Reinhold-Becker-Strasse 5**
**DDR-8053 Dresden(DD)**

(72) Erfinder: **Bäumert, Karl-Heinz**
**Paul-Bertz-Strasse 15**
**DDR-9044 Karl-Marx-Stadt(DD)**

(72) Erfinder: **Faulstich, Klaus, Dr.**
**Wallotstrasse 29**
**DDR-8019 Dresden(DD)**

(72) Erfinder: **Grässler, Rolf, Dr.**
**Gabelsberger-Strasse 10**
**DDR-8250 Meissen(DD)**

(72) Erfinder: **Kasper, Walter, Dr.**
**Mitschurinstrasse 4**
**DDR-9030 Karl-Marx-Stadt(DD)**

(72) Erfinder: **Klebau, Joe, Dr. Dipl.-Ing.**
**Zschertnitzerweg 8**
**DDR-8020 Dresden(DD)**

(72) Erfinder: **Nikolussi, Hansjörg**
**Haus Nr. 22**
**I-39050 Deutschnofen (BZ)(IT)**

(72) Erfinder: **Voitel, Dieter, Dipl.-Ing.**
**Karl-Marx-Allee 27**
**DDR-9010 Karl-Marx-Stadt(DD)**

(74) Vertreter: **Hering, Hartmut, Dipl.-Ing.**
**Seebenseestrasse 30**
**D-8000 München 70(DE)**

(54) **Anordnung zu Signalauswertung für Überwachungssysteme.**

(57) Zur Verbesserung der Genauigkeit der Analyse von Alarmkurven in Überwachungssystemen zur Objektsicherung und zum Personenschutz und zur Reduzierung von Fehlalarmen wird eine Anordnung zur Signalauswertung für derartige Überwachungssysteme angegeben, bei denen von zu erkennenden Objekts (8) in einer zwischen einem Sender (5) und einem Empfänger (6) gerichteten elektromagnetischen Strahlungsfeld (7) im Mikrowellen- oder Infrarotwellenbereich gebildeten Überwachungsstrecke eine Alarmkurve erzeugt wird, wobei die Anordnung derart ausgelegt und beschaffen ist, daß eine Analysiereinrichtung (2) mit einem programmierbaren Rechner (13) die Alarmkurven nach einer Umwandlung in digitale Werte verarbeitet und bewertet, sowie die jeweiligen örtlichen Gegebenheiten berücksichtigende Ansprechschwellen und Regelgrößen ermittelt, die über einen von einem Digital-Analog-Wandler (16), einem hiervon gesteuerten Stellglied (17) und dem Rechner (13) gebildeten Regelzweig zum Abgleich der Zustandsänderungen und einer Parameterdrift der Meßwerterfassung über das Stellglied (17) die Meßwerterfassung entsprechend beeinflussen.

./...

EP 0 113 412 A2

FIG.2

## DIPL.-ING. HARTMUT HERING
### PATENTANWALT

Zugelassener Vertreter beim Europäischen Patentamt
Professional Representative before the European Patent Office
Mandataire agréé près l'Office Européen des Brevets

SEEBENSEESTR. 30
D 8000 MÜNCHEN 70

Telefon: (089) 71 65 65
Telegramme: Tecpat Münch'

**0113412**

EP 383 - WOE

Sectron

Handwerkerzone

I 39050 Deutschnofen BZ

---

## Anordnung zur Signalauswertung für Überwachungssysteme

---

Die Erfindung betrifft eine Anordnung zur Signalauswertung für Überwachungssysteme zur Objektsicherung und zum Personenschutz, mit einer zwischen einem Sender und einem Empfänger durch ein gerichtetes, elektromagnetisches Strahlungsfeld im Mikrowellen- oder Infrarotbereich gebildeten Überwachungsstrecke, und einer einen Niederfrequenzvorverstärker und eine nachgeschaltete Demodulatorstufe enthaltenden Auswerteeinrichtung, die vom Empfänger eine von der Empfangsfeldstärke abhängige Meßspannung erhält, die im ungestörten Zustand ein Konstantsignal ist und sich bei Störungen, verursacht durch ein zu erkennendes und sich in der Überwachungsstrecke bewegendes Objekt, in Form einer Alarmkurve ändert.

Ein Überwachungssystem zur Objektsicherung und zum Personenschutz mittels einer Mikrowellenschranke mit einem
Sender und einem Empfänger der eingangs genannten Art
ist aus DE-A 28 06 448 bekannt. Die Auswerteeinrichtung
weist hierbei eine Auswerteschaltung auf, an die eine
von der Empfangsfeldstärke abhängige Meßspannung für die
Alarmerzeugung angelegt wird. Die Meßspannung wird an
eine Gleichspannungsvergleicherstufe angelegt, die ein
Ausgangssignal bei einer oberen und einer unteren Ansprechschwellenspannung, abhängig von Meßspannungsschwankungen infolge Empfangsfeldstärkeschwankungen durch im
Mikrowellenfeld zu erkennende Objekte abgibt. Bei diesem
Überwachungssystem sind zur Auswertung fest verdrahtete
elektrische Schaltungen vorgesehen, so daß die Auswertung durch analoge Signalverarbeitung erfolgt. Die Alarmschwellen werden mit Hilfe von Potentiometern voreingestellt. Nach der Erstellung des Überwachungssystems sind
daher aufwendige Test- und Justierungsarbeiten durchzuführen. Parameterdrifterscheinungen machen eine ständige
Nachjustierung des Überwachungssystems erforderlich. Auch
hat sich gezeigt, daß bei diesem bekannten Überwachungssystem relativ häufig Fehlalarme ausgelöst werden, da sich
die Alarmkurven aufgrund der Vielfalt von möglichen Ausbildungsformen nicht zuverlässig mit Hilfe einer fest
vorgegebenen Auswertecharakteristik analysieren lassen.

Von daher zielt die Erfindung darauf ab, eine Anordnung
zur Signalauswertung für Überwachungssysteme der eingangs
genannten Art unter Überwindung der zuvor geschilderten
Schwierigkeiten derart weiterzubilden, daß unter Vereinfachung
der Test- und Justierarbeiten eine verbesserte und genauere
Analysierung und Differenzierung der Alarmkurven mit
möglichst wenig Fehlalarmauslösungen ermöglicht werden.

Nach der Erfindung wird den Nachteilen und Schwierigkeiten
beim Stand der Technik mit den Merkmalen des Anspruchs 1
abgeholfen.

Bei der erfindungsgemäßen Anordnung zur Signalauswertung für
Überwachungssysteme ist eine Alarmkurvenanalysiereinrichtung
vorgesehen, die mit Hilfe eines Rechners eine digitale
Verarbeitung der analog am Ende der Überwachungsstrecke
abgegriffenen Alarmkurven ermöglicht. Als Rechner wird vorzugsweise ein Klein- oder Mikrorechner verwendet, der allgemein
als lokaler Rechner bezeichnet wird. Bei dieser Auswertung
der Alarmkurven werden Ansprechschwellen und Regelgrößen
ermittelt, die die jeweiligen örtlichen Gegebenheiten
berücksichtigen, so daß sich die Wahrscheinlichkeit
von Fehlalarmauslösungen, bedingt durch eine ungenügende
Berücksichtigung der örtlichen Gegebenheiten, auf ein
Minimum reduzieren läßt. Da die Ansprechschwellen und
Regelgrößen unmittelbar aus Alarmkurven des Überwachungssystems ermittelt werden, kann durch die erfindungsgemäße
Auslegung erreicht werden, daß die Anordnung zur Signalauswertung selbst einstellend oder selbstjustierbar ist
(adaptive Regelung), um den Aufwand für Test- und Justierarbeiten zu verringern. Auch lassen sich mögliche Fehlerquellen, die zu Fehlalarmen führen können, durch die Vermeidung
einer fest vorgegebenen Ansprechschwellencharakteristik
auf diese Art und Weise ausschalten. Zudem ist eine einfache Anpassung des Überwachungssystems an die jeweiligen
Anforderungen und Gegebenheiten möglich. Die nach der
Analog/Digitalwandlung in dem programmierbaren Rechner
ermittelten Ansprechschwellen und Regelgrößen werden
unter Zwischenschaltung eines Digital/Analogwandlers und
eines Stellgliedes, die zusammen mit dem Rechner einen
Regelzweig bilden, der Auswerteeinrichtung zugeführt, die
dem Empfänger des Überwachungssystems nachgeschaltet ist.
Hierdurch können Zustandsänderungen und eine Parameterdrift
mit Hilfe des so vorgesehenen Regelkreises ständig abgeglichen werden, so daß man eine exakte Analyse der Alarmkurven und sogar eine Differenzierung der Art und des Verhaltens der zu erkennenden Objekte ermöglicht. Zum Regelkreis gehören neben den Baugruppen des Regelzweigs auch die
Baugruppen NF-Vorverstärker, Demodulatorstufe, A/D Wandler
und Speicher. Auch läßt sich die Auflösung der Alarmkurven
bei der Auswertung mit Hilfe des Rechners wählen, um eine
Anpassung an die gewünschten Anforderungen des Überwachungssystems zu erreichen.

- 5 -

Weitere vorteilhafte Ausgestaltungen der Erfindung ergeben sich aus den Unteransprüchen.

Bei der Auslegung der Anordnung nach Anspruch 2 wird dem
Rechner eine Taktzentrale mit einer Zeitgeberschaltung zugeordnet, mittels der der Auswerteeinrichtung wählbare Zeitintervalle vorgegeben werden können, um eine
zeitlich gesteuerte Auswertung der digitalisierten Alarmkurven zu ermöglichen.

Bei der Ausbildung der Anordnung nach Anspruch 3 wird
eine weitere Vereinfachung der Einstell- und Justierarbeiten ermöglicht, da sich die Alarmkurven visuell mit
Hilfe eines Monitors auswerten lassen und gegebenenfalls
in Abhängigkeit hiervon eine Alarmauslösung durch den
Rechner verhindert werden kann. Auch wird hierdurch
ermöglicht, daß man dem Rechner Fehlalarmerkennungen
vorgibt, so daß dieser fähig ist, im Wiederholungsfalle
einer solchen Alarmkurve von sich aus die Auslösung eines
Alarms zu verhindern (adaptive Regelung).

Bei der Ausbildung nach Anspruch 4 ist zusätzlich noch
eine Eingabeeinrichtung mit dem Rechner verbunden,
über die Kennungen für einen Fehlalarm eingebbar sind,
um in der Testphase des Überwachungssystems mögliche Ursachen für Fehlalarmauslösungen auszuschalten.

Zur Berücksichtigung der mit Hilfe des Rechners ermittelten Ansprechschwellen und Regelgrößen dient die Auslegung der Anordnung nach Anspruch 5, wobei auf den Niederfrequenzvorverstärker der Auswerteeinrichtung hierbei direkt Einfluß genommen wird. Zusätzlich ist die Analysiereinrichtung noch mit einer Alarmzentrale verbindbar, in der beim Arbeiten des Überwachungssystems sich das Wachpersonal aufhält. Nach Anspruch 6 ist in dieser Alarmzentrale ein Zentralrechner vorgesehen, mit dem die Ausgabeeinrichtung des Rechners verbunden ist, so daß von dem Rechner das Alarmsignal in die Alarmzentrale übermittelt wird.

Zur Analyse von Alarmsignalen können gemäß Anspruch 7 mit dem Zentralrechner ein Monitor, eine Tastatur und gegebenenfalls ein Drucker verbunden sein, so daß auch eine visuelle Anzeige des Alarmsignals sowie ein Ausdrucken desselben ermöglicht wird.

Vorzugsweise lassen sich gemäß Anspruch 8 an diesen Zentralrechner in der Alarmzentrale auch Auswerteeinrichtungen und Analysiereinrichtungen weiterer Überwachungsstrecken in Multiplex-Schaltweise anschließen. Auf diese Weise wird ermöglicht, daß in der Alarmzentrale mehrere Überwachungsstrecken und Überwachungssysteme gleichzeitig kontrolliert werden können.

- 7 -

Bei der Ausbildungsform der Anordnung nach Anspruch 9 werden die Alarmkurven direkt an den Zentralrechner mit Hilfe einer Oszillatorschaltung fernübertragen, so daß der Zentralrechner die Alarmkurvendaten von mehreren Empfängern über Datenfernübertragungsleitungen zeitgeschachtelt (d.h. im Zeitmultiplex-Betrieb) empfängt, speichert und auswerten kann. Durch Vergleich der Empfangsbedingungen läßt sich rechnergestützt eine schnelle Analyse von generellen Zustandsänderungen in dem gesamten, von den Überwachungssystemen erfaßten Bereichen vornehmen, so daß sich insbesondere witterungsbedingte Fehlalarmauslösungen, wie durch Auftreten eines Gewitters, vermeiden lassen. Selbstverständlich müssen dann noch gegebenenfalls Einrichtungen vorgesehen sein, die eine Fernübertragung der hiervon abhängigen und zu berücksichtigenden Regelgrößen zu den jeweiligen Empfängern ermöglichen, wobei die Regelgrößen für den Empfänger in Analogwerte umgeformt werden müssen. Die Fernübertragung kann drahtlos oder auf eine andere geeignete Weise erfolgen. Um eine Fernübertragung und hierdurch möglicherweise auftretende Störungen zu vermeiden, ist bei der Ausbildungsform der Anordnung gemäß Anspruch 10 eine solche Auslegung getroffen, daß die Analysiereinrichtung mit ihren Bauteilen vorzugsweise im Gehäuse des Empfängers untergebracht ist, so daß die Empfänger der Überwachungssysteme autonom sind und daß die jeweiligen Analysiereinrichtungen mit entsprechenden Eingabe- und Ausgabeeinrichtungen in der Alarmzentrale verbunden sind. Hierbei übernimmt der Zentralrechner in der Alarmzentrale eine Leitfunktion für die jeweiligen Rechner in den Analysiereinrichtungen der Empfänger.

Bei der erfindungsgemäßen Anordnung zur Signalauswertung für Überwachungssysteme wird der Signalverlauf der Empfangsfeldstärke mit Hilfe der Analysiereinrichtung in dem jeweiligen Empfänger autonom analysiert. Die Analysiereinrichtung analysiert auch den Verlauf des Empfangssignals, da sie mit Hilfe der Alarmkennungen in einer Eintestphase hierzu in der Lage ist. Diese Alarmkennungen können im Zusammenwirken mit dem Zentralrechner in der Leitebene aktualisiert werden. Auch ermöglicht die erfindungsgemäße Anordnung eine Anpassung (Adaption) des Überwachungssystems an langzeitige Veränderungen der Parameter bei der Auswertung der Alarmkurven. Hierzu kann in bestimmten Zeitabständen die Verstärkung des Niederfrequenzvorverstärkers nachgeregelt werden. Von Vorteil ist ferner, daß bei komplexen Alarmanlagen, bestehend aus mehreren Überwachungssystemen, dem Zentralrechner in der Leitebene nur verdichtete Informationen zugeleitet werden, da die Analysiereinrichtung in den jeweiligen Empfängern bereits eine Vorauswertung und Voranalysierung vornimmt. So werden Veränderungen in dem gerichteten elektromagnetischen Strahlungsfeld erst gemeldet, wenn die dem Überwachungssystem zugeordnete Analysier-

- 9 -

einrichtung aufgrund dieser Änderung einen Alarm auslöst.
Das Wachpersonal in der Alarmzentrale kann dann zusätzlich mit Hilfe des Monitors, der mit dem Zentralrechner
verbunden ist, eine individuelle Analyse vornehmen. Da
bei einer solchen dezentralen Signalverarbeitung in mehreren Ebenen autonome Einrichtungen vorhanden sind, erhält
man eine hohe Zuverlässigkeit sowie eine leichte Bedienbarkeit. Auch lassen sich dezentral gewonnene Informationen
zu neuen Analysekriterien in der zentralen Leitebene verknüpfen. Ferner ermöglicht eine solche Anordnung auch eine
vielseitige Verwendbarkeit eines solchen Überwachungssystems
oder mehrerer solcher Überwachungssysteme, da eine sehr genaue und von mehreren wählbaren Parametern abhängige Analysierung der am Empfänger empfangenen Signale möglich ist.
Auch läßt sich eine Reduzierung oder Erweiterung der Anordnung um ein oder mehrere Überwachungssysteme ohne Schwierigkeiten verwirklichen.

Vorzugsweise erfolgt die Auswertung der Alarmkurven mit
Hilfe eines im Rechner gespeicherten Programms, so
daß dieser die Merkmale der aktuellen Alarmkurven mit Signalmerkmalen vergleichen kann, die in einer Justierphase
unter Ausnutzung von eingegebenen Fehlalarmkennungen ermittelt wurden. Bei der Darstellung der Alarmkurven auf
dem Monitor im Servicebetrieb ist eine Unterscheidung zwischen Störanteil und echtem Alarm möglich. Nach Abschluß

- 10 -

dieser Einjustierphase erfolgt die Alarmauslösung unter
Ausnutzung der Vergleichsmöglichkeiten automatisch in
der Alarmzentrale, wobei durch Übertragung einer Fehlalarmkennung aus der Alarmzentrale noch eine weitere
Nachjustierung zur Ausschaltung von weiteren Fehlalarmen
möglich ist.

Die Erfindung wird nachstehend an einem Beispiel unter
Bezugnahme auf die beigefügte Zeichnung näher erläutert.
Darin zeigt:

Figur 1     ein Beispiel einer analog erfaßten Alarmkurve,
            und

Figur 2     ein Blockschaltbild einer Anordnung zur Signal-
            auswertung für Überwachungssysteme zur Objekt-
            sicherung und zum Personenschutz.

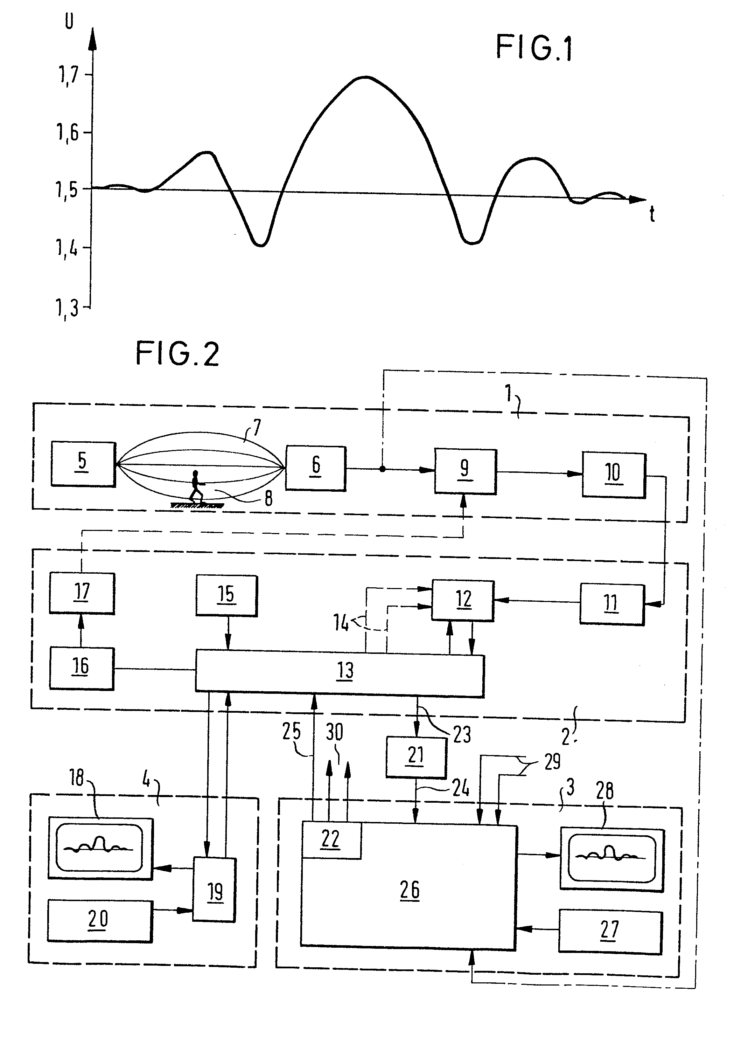

Durch eine Störgröße im Bereich eines zwischen einem Sender und einem Empfänger gerichteten elektromagnetischen
Strahlungsfeldes, wie einer Mikrowellenschranke, erhält
man am Empfänger eine in Figur 1 gezeigte Signalkurve,
die als Alarmkurve bezeichnet wird. Hierbei ist der Verlauf der Spannung U über der Zeit t aufgetragen. Eine solche
Alarmkurve gibt beispielsweise die Bewegung einer Person
im Bereich der Mikrowellenschranke, basierend auf den Aus-

- 11 -

wirkungen des Durchquerens der ersten, zweiten und dritten Fresnelzone wieder.

Bei dem Blockschaltbild der Anordnung zur Signalauswertung für Überwachungssysteme zur Objektsicherung und zum Personenschutz in Figur 2 sind drei wesentliche Hauptbaugruppen gezeigt. Mit 1 ist eine Auswerteeinrichtung, mit 2 eine Analysiereinrichtung und mit 3 eine Alarmzentrale bezeichnet, die in Abhängigkeit von der Systemgröße unterschiedliche Ausbaustufen aufweisen kann. Ferner ist als weitere Baugruppe noch ein Serviceterminal 4 gezeigt.

Die Auswerteeinrichtung 1 weist einen amplitudenmodulierten Mikrowellensender 5 und einen hierauf abgestimmten Mikrowellenempfänger 6 auf. Vom Mikrowellensender 5 wird über eine Parabolantenne ein scharf gebündeltes Mikrowellenfeld 7 in Form elektromagnetischer Wellen auf den Mikrowellenempfänger 6 gerichtet. Die Überwachungsstrecke zwischen dem Mikrowellensender 5 und dem Mikrowellenempfänger 6 kann eine Größe von bis zu 300 m haben. Der Mikrowellenempfänger weist neben einer Parabolantenne einen Hochfrequenzmodulator auf. Ein sich zwischen dem Mikrowellensender 5 und dem Mikrowellenempfänger 6 bewegendes und zu erkennendes Objekt 8 stört das gerichtete Mikrowellenfeld 7 zwischen den beiden. Das gestörte Mikrowellenfeld wird von dem Mikrowellenempfänger über die Parabolantenne empfangen.

Nach der Hochfrequenzdemodulation der Signalkurve durch den Hochfrequenzmodulator des Mikrowellenempfängers 6 wird diese über einen Niederfrequenzvorverstärker 9 einer Demodulatorstufe 10 zugeführt, so daß man die in Figur 1 gezeigte Alarmkurve nach Umwandlung erhält. Für den Niederfrequenzvorverstärker 9 und für die Demodulatorstufe 10 lassen sich fest verdrahtete Auswerteeinrichtungen arbeitend auf der Basis der Analogtechnik verwenden.

Die mit 2 bezeichnete Analysiereinrichtung weist eingangsseitig einen Analog/Digital-Wandler 11 auf, der mit einem Speicher 12 verbunden ist. Mit diesem Analog/Digital-Wandler 11 wird die vom Niederfrequenzvorverstärker 9 und der Demodulatorstufe 10 erfaßte Alarmkurve digitalisiert. Der Speicher 12 für die Digitalwerte der Alarmkurve ist als batterie gepufferter CMOS- RAM -Halbleiterspeicher ausgebildet. Die Mindestkapazität für den Speicher 12, der teilweise auch als Arbeitsspeicher für einen nachstehend noch angegebenen Rechner 13 genutzt wird, beläuft sich auf 2 kByte. Der programmierbare Rechner 13 hat einschließlich seines Programmspeichers eine Mindestkapazität von 8 kByte, wobei er mit Hilfe eines Programms die Alarmkurven verarbeitet und auswertet, die er aus dem Speicher 12 entnimmt und nach der Auswertung wieder dort abspeichert. Mit gebrochenen Linien 14 ist in Figur 2 ein Steuerleitungspaar 14 einer Abruf- und Einschreibsteuerung des Kleinrechners 13 gezeigt. Mit durchgezogenen Linienist der
Datenfluß beispielsweise zwischen dem Speicher 12 und
dem Rechner 13 angedeutet. Die Analysiereinrichtung
2 weist ferner noch eine quarzstabilisierte Taktzentrale
mit einer Zeitgeberschaltung 15 auf. Ferner ist eine Rücksetzschaltung für die Ausgangsrückstellung des Rechners 13
vorgesehen. Ferner enthält die Analysiereinrichtung
einen Digital/Analog-Wandler 16 und ein Stellglied 17, die
mit dem Rechner 13 verbunden sind. Das Stellglied 17
ist mit dem Steuereingang des Niederfrequenzvorverstärkers
9 verbunden. Der Digital/Analog-Wandler 16 und das Stellglied 17 bilden in Verbindung mit dem Rechner 13 einen
Regelzweig zum Abgleich von Zustandsänderungen und Parameterdriften der Überwachungsstrecke. Hierdurch sollen insbesondere Zustandsänderungen, wie witterungsbedingte Änderungen
und dergleichen abgeglichen werden. Auch ist der Temperaturgang der Bauelementparameter der Überwachungsstrecke und
des nachgeschalteten Niederfrequenzvorverstärkers 9 sowie
der Demodulatorstufe 10 korrigierbar. Die Korrekturgrößen
bzw. Regelgrößen werden von dem Rechner 13 aus der
digitalisierten Alarmkurve bei der Ermittlung abgeleitet.

Der Serviceterminal 4 enthält einen Monitor 18, der über
eine Anschlußsteuereinrichtung 19 mit dem Rechner 13
verbunden ist. Die Anschlußsteuereinrichtung 19 enthält hierbei auch einen Bildwiederholungsspeicher und sie ist über einen Datenkanal, einen Adresskanal und einen Steuerkanal des Rechners 13 mit diesem verbunden. Eine Tastatur 20 dient zur Eingabe von Befehlen und sonstigen Daten bei der Einstellung, Justierung und Korrektur der Anordnung zur Signalauswertung für Überwachungssysteme insgesamt.

Die Analysiereinrichtung 2 bzw. der Rechner 13 derselben ist über eine Ausgabeeinrichtung 21 mit der Alarmzentrale 3 verbunden, die eine Eingabeeinrichtung 22 aufweist, mittels der Steuersignale an die Analysiereinrichtung 2 abgegeben werden können. Die Verbindung zwischen dem Hechner 13 und der Alarmzentrale 3 für die Ausgabeeinrichtung 21 ist in der Zeichnung über die Leitungen 23 und 24 und für die Eingabeeinrichtung 22 über die Leitung 25 angedeutet.

Im einfachsten Fall ist die Eingabeeinrichtung 22 eine Taste zur Eingabe einer Fehlalarmkennung. Bei der einfachsten Ausbildungsform kann die Ausgabeeinrichtung 21 ein Relais sein, durch dessen Kontakt das vom Rechner 13 gelieferte Alarmsignal über Leitungen 23,24 potential getrennt an die Alarmzentrale übertragen wird. Zweckmäßigerweise ist die Eingabeeinrichtung 22 über die Leitung 25 mit einem Optokopplereingang des Rechners 13 verbunden.

Bei einer weiteren Ausbildungsform kann als Leitebene
in der Alarmzentrale ein Zentralrechner 26 vorgesehen
sein, mit dem eine Tastatur 27 und ein Monitor 28 zur
zusätzlichen individuellen Analyse von Alarmsignalen
durch das Wachpersonal verbunden sind. Gegebenenfalls
kann zusätzlich noch ein Drucker zur Aufzeichnung ausgewählter Ereignisse angeschlossen sein. Mit den Leitungen 29 und 30 sind weitere Anschlußleitungen angedeutet,
die zu weiteren Überwachungssystemen führen, die jeweils
eine Auswerteeinrichtung 1 und eine zugeordnete Analysiereinrichtung 2 enthalten.

Mit strichpunktierten Linien ist in Figur 2 noch eine
weitere Ausführungsvariante eingetragen. Bei dieser können die durch die Auswerteeinrichtung 1 erfaßten Meßwerte
zum Zentralrechner 26 der Alarmzentrale 3 fernübertragen
werden. Zur Fernübertragung wird die Alarmkurve am Mikrowellenempfänger 6 über eine spannungsgesteuerte Oszillatorschaltung 32 in eine Schwingungsfolge einer sich entsprechend den zu erkennenden Störobjekten ändernden Frequenz umgewandelt und die Schwingungen je Zeiteinheit werden am Zentralrechner gezählt, so daß auf diese Art und
Weise die Alarmkurve in eine digitale Darstellung umgewandelt wird. In diesem Fall können die bei den anderen
Ausführungsformen vorgesehenen Baugruppen zwischen Empfänger 6
und Zentralrechner 26 entfallen, d.h. die Baugruppen 9-25.

Patentansprüche

1. Anordnung zur Signalauswertung für Überwachungssysteme
zur Objektsicherung und zum Personenschutz, mit einer
zwischen einem Sender (5) und einem Empfänger (6)
durch ein gerichtetes elektromagnetisches Strahlungsfeld (7) im Mikrowellen- oder Infrarotbereich gebildeten Überwachungsstrecke, und einer einen Niederfrequenzvorverstärker (9) und eine nachgeschaltete Demodulatorstufe (10) enthaltenden Auswerteeinrichtung (1), die vom
Empfänger (6) eine von der Empfangsfeldstärke abhängige
Meßspannung erhält, die im ungestörten Zustand ein Konstantsignal ist und sich bei Störungen, verursacht durch
ein zu erkennendes und sich in der Überwachungsstrecke
bewegendes Objekt (8) in Form einer Alarmkurve ändert,
dadurch g e k e n n z e i c h n e t, daß eine Alarmanalysierungseinrichtung (2) vorgesehen ist, die aufweist:

einen Analog/Digital-Wandler (11), der die zeitabhängigen Amplitudenwerte der Alarmkurve in Digitalwerte
umwandelt,

einen nachgeschalteten Speicher (12) für die Digitalwerte,

einen programmierbaren Kleinrechner (13), der die digitalisierten Alarmkurven aus dem Speicher (12) zur Aus-

wertung und zur Ermittlung von die jeweiligen örtlichen Gegebenheiten berücksichtigenden Ansprechwellen und Regelgrößen verarbeitet, und in Abhängigkeit von dem Auswerteergebnis ein Alarmsignal über eine Ausgabeeinrichtung (21) abgibt, und

einen vom Rechner (13), einem Digital/Analog-Wandler (16) und einem die Auswerteeinrichtung beeinflussenden Stellglied (17) gebildeten Regelzweig für den Meßwertregelkreis zum Abgleich von Zustandsänderungen und einer Parameterdrift bei der Auswerteeinrichtung (1).

2. Anordnung nach Anspruch 1, dadurch g e k e n n - z e i c h n e t, daß mit dem Rechner (13) eine Taktzentrale mit einer Zeitgeberschaltung (15) verbunden ist, die die Zeitbasis für die Meßwerterfassung in der Auswerteeinrichtung (1) vorgibt.

3. Anordnung nach Anspruch 1 oder 2, dadurch g e k e n n - z e i c h n e t, daß mit dem Rechner (13) ein Monitor (18) zur Anzeige und visuellen Auswertung der Alarmkurven derart verbunden ist, daß die Alarmauslösung durch den Rechner (13) in Abhängigkeit von dem Ergebnis der visuellen Auswertung unterdrückbar ist.

4. Anordnung nach einem der Ansprüche 1 bis 3, dadurch gekennzeichnet, daß über eine Eingabeeinrichtung (22) in den Rechner (13) eine Kennung für einen Fehlalarm eingebbar ist.

5. Anordnung nach einem der Ansprüche 1 bis 4, dadurch gekennzeichnet, daß die Ausgangsspannung der Demodulatorstufe (10) an dem Analog/Digitalwandler (11) und die Ausgangsspannung des Digital/Analogwandlers (16) des Regelzweiges an einem Steuereingang des Niederfrequenzvorverstärkers (9) anliegt, und daß die Analysiereinrichtung (2) mit einer Alarmzentrale (3) verbindbar ist.

6. Anordnung nach Anspruch 5, dadurch gekennzeichnet, daß in der Alarmzentrale (3) ein Zentralrechner (26) vorgesehen ist, mit dem die Ausgabeeinrichtung (21) des Rechners (13) verbunden ist.

7. Anordnung nach Anspruch 6, dadurch gekennzeichnet, daß mit dem Zentralrechner (26) ein Monitor (28), eine Tastatur (27) und gegebenenfalls ein Drucker zur Analyse von Alarmsignalen verbunden sind.

8. Anordnung nach Anspruch 6 oder 7, dadurch g e -
k e n n z e i c h n e t, daß an den Zentralrechner
(26) in der Alarmzentrale (3) Auswerteinrichtungen (1)
und Analysiereinrichtungen (2) weiterer Überwachungsstrecken in Multiplex-Schaltweise anschließbar sind.

9. Anordnung nach Anspruch 8, dadurch g e k e n n -
z e i c h n e t, daß die Alarmkurven der Überwachungssysteme zur Fernübertragung an den Zentralrechner (26)
durch eine spannungsgesteuerte Oszillatorschaltung (32)
in eine Schwingungsfolge einer sich entsprechend den
zu erkennenden Störobjekten ändernden Frequenz umgewandelt wird und im Zentralrechner (26) die Schwingungen je Zeiteinheit gezählt, die Zählwerte abgespeichert
und zur Bestimmung von Zustandsänderungen im Bereich aller
angeschlossener Überwachungsstrecken die Empfangsbedingungen
verglichen werden.

10. Anordnung nach einem der Ansprüche 1, 2, 4 oder 5,
dadurch g e k e n n z e i c h n e t, daß die Analysiereinrichtung (2) am Mikrowellenempfänger (6) vorgesehen oder im Gehäuse desselben untergebracht ist und
die Eingabeeinrichtung (22) und die Ausgabeeinrichtung
(21) in der Alarmzentrale (3) oder in ihrer Nähe angeordnet sind.

1/1

# FIG.1

# FIG.2